# EUROPEAN PATENT APPLICATION

(11) **EP 4 835 312 A1**
(43) Date of publication of application: **04.11.2026**
(21) Application number: 26172466.0
(22) Date of filing: 15.04.2026
(51) Int. Cl.: F16C 17/02, F16C 17/10, F16C 33/10, H01J 35/10

(54) **SYSTEMS AND METHODS FOR A HYDRODYNAMIC BEARING**

(30) Priority: 02.05.2025 US 202519197837
(71) Applicant: GE Precision Healthcare LLC, Waukesha, WI 53188 (US)
(72) Inventor: MUKHERJEE, Swarnajay, Milwaukee, 53219 (US); TRISCARI, Andrew Thomas, Milwaukee, 53219 (US)
(74) Representative: AWA Sweden AB

(57) **Abstract**

Systems and methods are disclosed herein for a hydrodynamic bearing (900, 700, 500, 1500), which may be included in an X-ray source (300, 104) of an X-ray imaging system (100) such as a CT imaging system. The hydrodynamic bearing (900, 700, 500, 1500) includes a rotational component configured to attach to an X-ray source target (406, 310) and a stationary component. A plurality of grooves (506, 416) formed in the stationary component is arranged in a groove pattern and configured to generate pressure in a fluid interface (320, 408) during rotation of the rotational component, wherein one or more of a groove depth (704, 704), a groove angle (1140), a groove cross sectional shape, a land to groove ratio, a diameter of the rotational component, and a diameter of the stationary component vary axially according to an expected thermal and structural deformation pattern (550, 650).

## Description

### TECHNICAL FIELD

The present description relates generally to a hydrodynamic bearing.

### BACKGROUND AND SUMMARY

Hydrodynamic bearings, also known as liquid metal bearings, spiral groove bearings or journal bearings, include a liquid-state metal as a lubricant disposed in a gap between a shaft and a sleeve to reduce friction and extend a lifespan of the bearing compared to other bearing types such as contact bearings or ball bearings. Such advantages of hydrodynamic bearings make them useful in various applications such as medical imaging (e.g., computed tomography scans, X-ray imaging, etc.).

The shaft and/or the sleeve of the hydrodynamic bearing may expand or contract due to thermal properties of the materials of which the shaft and sleeve are comprised and a temperature profile generated under operating conditions. Such expansion and/or contraction may alter the geometry of the gap between the shaft and the sleeve, resulting in an uneven distance across the gap between the shaft and the sleeve. That is, the distance may vary axially along the hydrodynamic bearing, causing a flow pattern of the lubricant to change. Specifically, a net axial flow may change. Further, repercussions of the altered flow pattern may include the lubricant being pumped out of the bearing as a consequence of the altered flow pattern. Lubricant loss and consequently starvation of the bearing may result in undesirable dynamic characteristics of the bearing, such as modified stiffness and damping. Further, additional factors may exacerbate the lubricant loss, including capillary forces due to the gap being sufficiently thin, gantry rotation and centrifugal forces leading to a modified liquid/air (e.g., vacuum) interface, as well as squeeze flow of the lubricant occurring without sufficient restoring pressure.

Thus, embodiments of a hydrodynamic bearing are disclosed herein that address at least some of the issues described above. The hydrodynamic bearing may comprise: a rotational component; and a stationary component including a surface having a plurality of grooves arranged in a groove pattern and configured to generate pressure in a fluid interface during rotation of the rotational component, where one or more of a groove depth, a diameter of the rotational component, a land to groove ratio, a groove cross sectional shape, a groove angle, or a diameter of the stationary component vary axially according to an expected thermal and structural deformation pattern.

In this way, lubricant loss due to thermal and structural deformation of the shaft and/or the sleeve under operating conditions (e.g., higher temperature, higher load, etc.) may be at least partially mitigated. For example, loss of lubricant may be reduced, or entirely avoided due to the modifications to the shaft and/or sleeve (e.g., axially varied diameters and/or groove depth) counteracting effects on pressure and lubricant flow patterns.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE FIGURES

The present disclosure will be better understood from reading the following description of non-limiting embodiments, with reference to the attached drawings, wherein below:
FIG. 1 shows a perspective view of an exemplary computed tomography (CT) imaging system including an X-ray source;
FIG. 2 shows a schematic depiction of an exemplary CT imaging system including an X-ray source;
FIG. 3 shows a cross-sectional view of an exemplary X-ray source including a hydrodynamic bearing in accordance with the present disclosure;
FIG. 4 shows a cross-sectional view of a portion of another exemplary X-ray source including a hydrodynamic bearing in accordance with the present disclosure;
FIG. 5 shows an expected thermal and structural deformation pattern;
FIG. 6 shows an expected thermal and structural deformation pattern;
FIG. 7 shows a thermal and structural deformation pattern and a corresponding hydrodynamic bearing in accordance with the present disclosure;
FIG. 8 shows a graph of the thermal and structural deformation pattern and groove depth of the corresponding hydrodynamic bearing of FIG. 7;
FIG. 9 shows a thermal and structural deformation pattern and a corresponding hydrodynamic bearing in accordance with the present disclosure;
FIG. 10 shows a graph of the thermal and structural deformation pattern and groove depth of the corresponding hydrodynamic bearing of FIG. 9;
FIG. 11 shows a shaft of a hydrodynamic bearing in accordance with the present disclosure;
FIG. 12 shows a shaft of a hydrodynamic bearing in accordance with the present disclosure;
FIG. 13 shows a shaft of a hydrodynamic bearing in accordance with the present disclosure;
FIG. 14 shows a shaft of a hydrodynamic bearing in accordance with the present disclosure;
FIG. 15 shows a shaft and a sleeve of a hydrodynamic bearing in accordance with the present disclosure; and
FIG. 16 shows a flowchart of a method for manufacturing a hydrodynamic bearing in accordance with the present disclosure.
FIG. 17 shows a graph of a thermal and structural deformation pattern and groove depth of a corresponding hydrodynamic bearing in accordance with the present disclosure.

### DETAILED DESCRIPTION

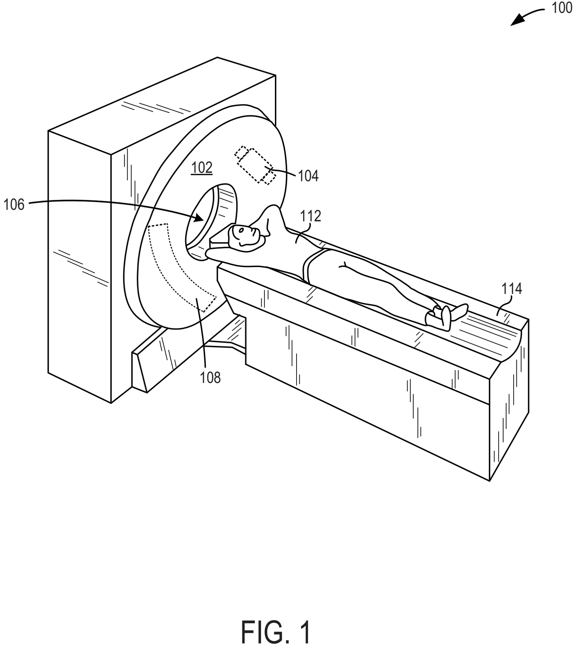

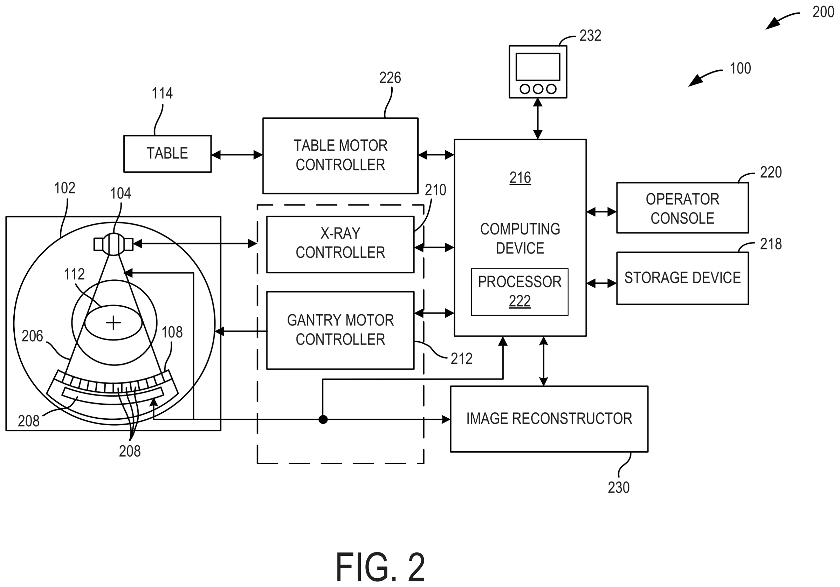

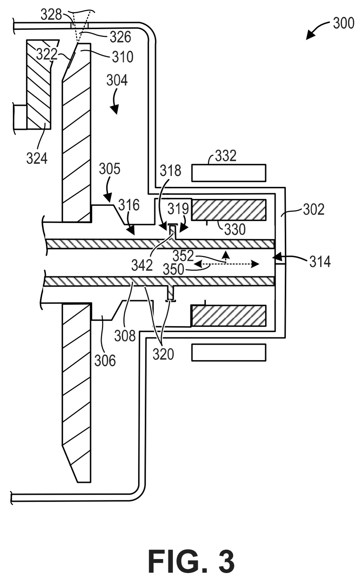

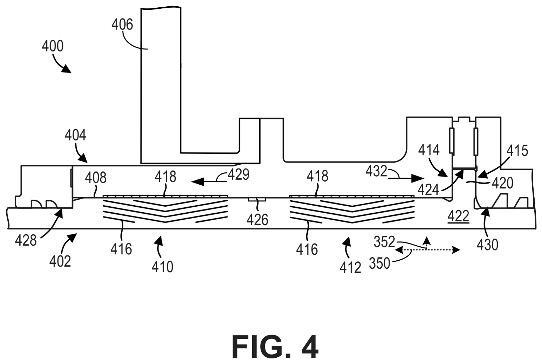

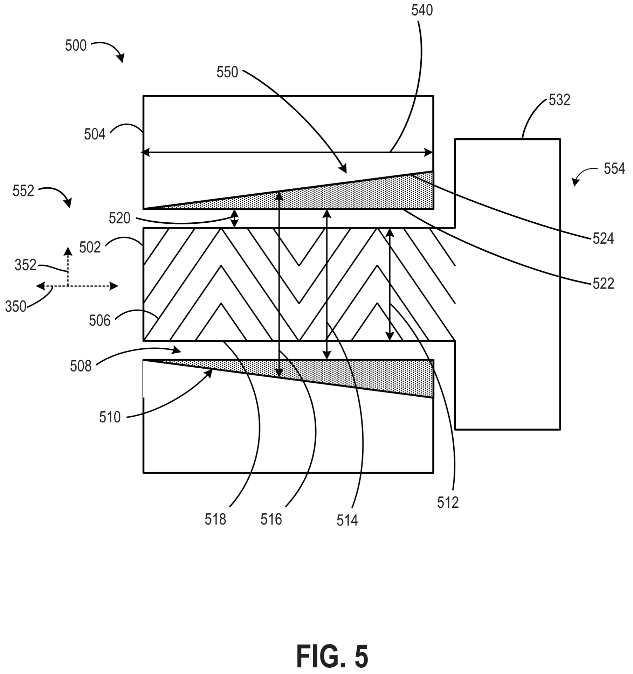

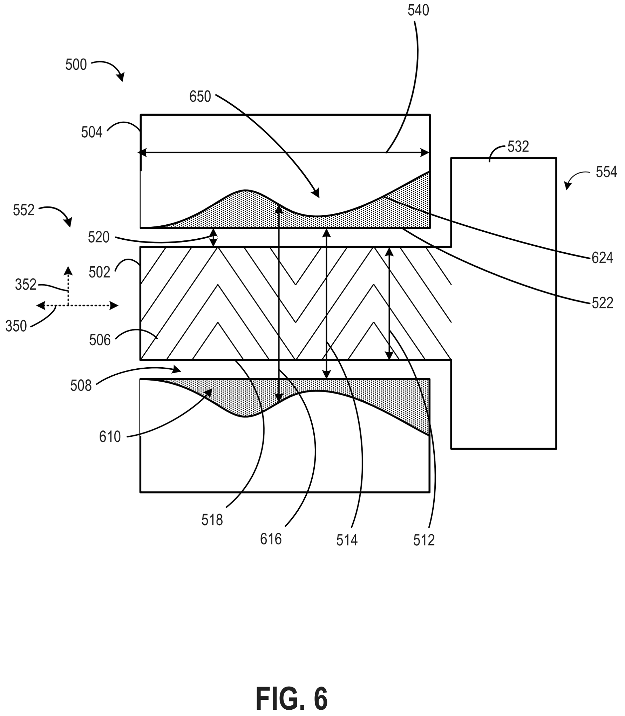

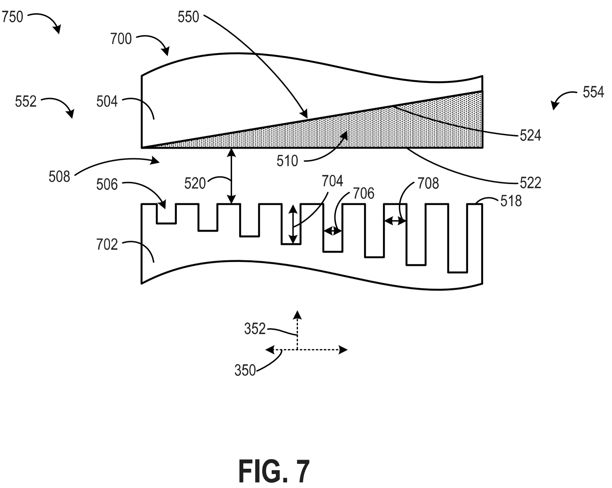

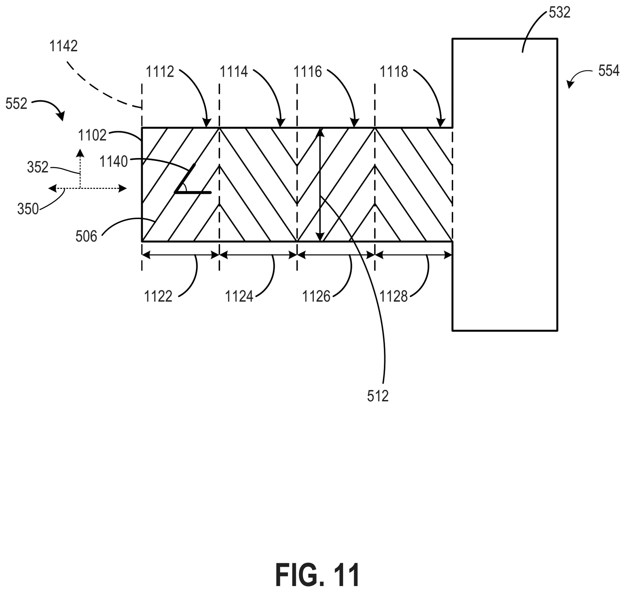

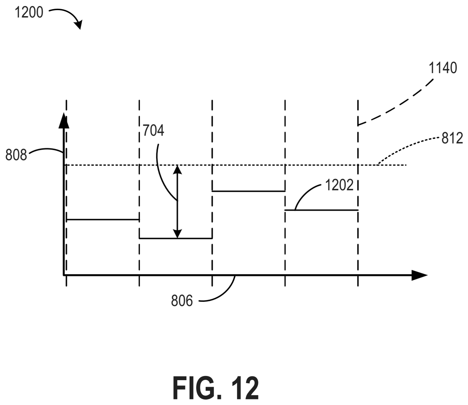

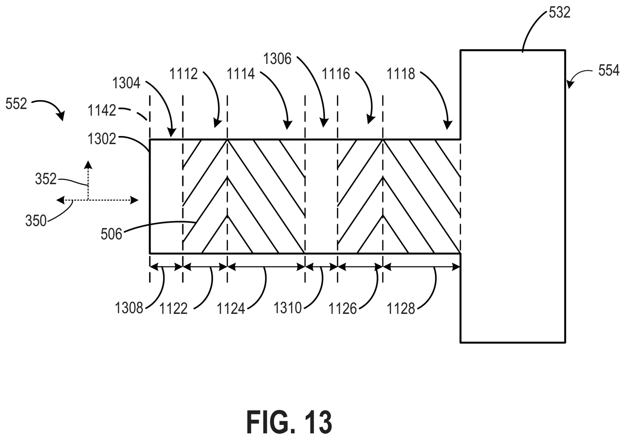

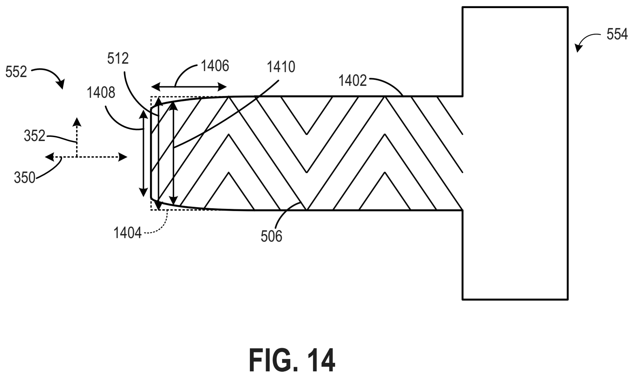

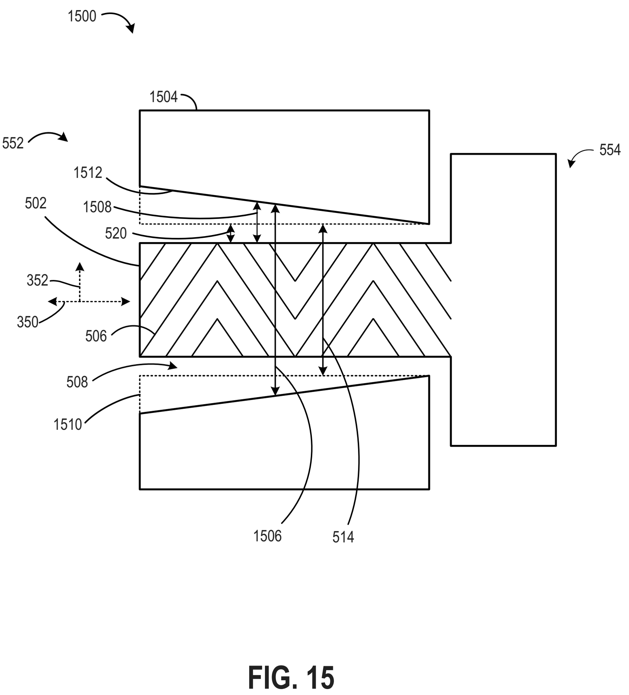

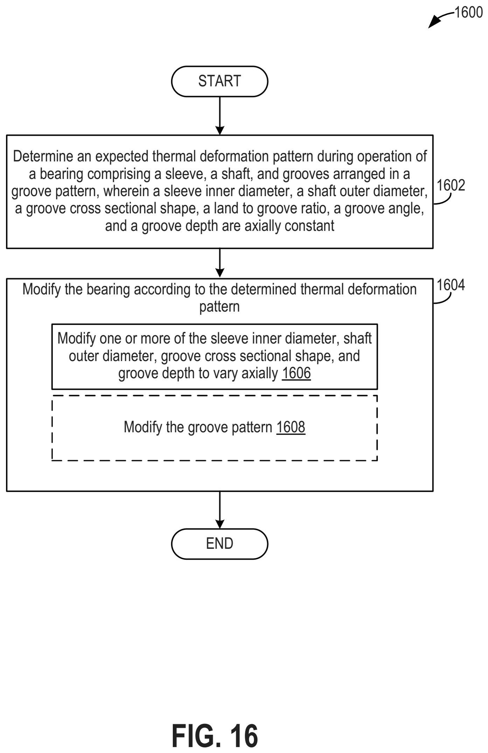

The following description relates to hydrodynamic bearings. A hydrodynamic bearing in accordance with the present disclosure may be included in an X-ray source or X-ray tube of an X-ray imaging system, such as a computed tomography (CT) imaging system. Examples of such an imaging system are illustrated in FIGS. 1 and 2. Examples of the X-ray source are shown in FIGS. 3 and 4, including hydrodynamic bearings of the present disclosure. The hydrodynamic bearing of the present disclosure may reduce lubricant (e.g., liquid metal) loss from a gap interposed between a stationary component (e.g., shaft) and a rotational component (e.g., sleeve). The lubricant loss may be the result of, for example, stationary and/or rotational component shape changes due to thermal expansion or contraction from temperature gradients, and elasto-hydrodynamics. Stationary and/or rotational component shape changes may additionally depend on structural load and relative movement (e.g., rotation). Examples of thermal and structural deformation patterns within the hydrodynamic bearing resulting from operation of the XX-ray source are shown in FIGS. 5 and 6. Variations in expected thermal and structural deformation patterns may be a result of specific thermal profiles generated by relative rotational motion, which depends on the amount of heat accumulated within the bearing, the rotational speed of the rotational component, geometry of the bearing and the corresponding lubricant flow pattern, resulting in locations where heat is disproportionately accumulated. Such thermal and structural deformation may alter lubricant flow patterns such as by altering local pressure, causing the lubricant fluid to be pumped out of conventional bearings. To reduce lubricant loss, the stationary component and/or the rotational component may be modified. More specifically, as one example of such a modification, depths of herringbone grooves in the stationary component may vary axially according to an expected thermal and structural deformation based on an operational thermal profile thereof and a load on the bearing. The groove depths may vary by axial sections as shown in FIG. 12, or continuously as shown in FIGS. 7-10. For instance, the profile of the groove depths may mirror the expected thermal and structural deformation pattern. Examples of the groove depth profiles corresponding to expected thermal and structural deformation patterns are shown in FIGS. 7-10 and 17. Additionally or alternatively to modifying groove depths, a cross-sectional shape of the grooves, a land to groove ratio, and/or a groove angle may be modified to vary axially according to the expected thermal and structural deformation pattern. Additionally or alternatively, sections of the herringbone groove pattern may be made relatively longer than others as shown in FIG. 11. Additionally or alternatively, some sections may be altered to lack grooves entirely, as shown in FIG. 13. Additionally or alternatively, the shaft outer diameter may be contoured to vary axially, as shown in FIG. 14. Additionally or alternatively, an inner diameter of the sleeve may vary axially, as shown in FIG. 15. In this way, the likelihood of reduced load capacity, suboptimal stiffness and damping properties, and/or other consequences caused by lubricant loss from the hydrodynamic bearing may be reduced (e.g., avoided). Further, a number and/or complexity of seals in the system may be reduced, as there is less fluid flow directed at the seal. A method for manufacturing the hydrodynamic bearing in accordance with the present disclosure is shown as a flowchart in FIGS. 16.

It is to be understood that the specific assemblies and systems illustrated in the attached drawings, and described in the following specification are exemplary embodiments of the inventive concepts defined herein. For purposes of discussion, the drawings are described collectively. Thus, like elements may be commonly referred to herein with like reference numerals and may not be re-introduced.

Before further discussion of the hydrodynamic bearing of the X-ray source, an example imaging system in which the X-ray source may be implemented is shown. FIG. 1 shows a schematic representation of an embodiment of an X-ray imaging system 100 configured both to acquire original image data and to process the image data for display and/or analysis in accordance with exemplary embodiments. It will be appreciated that various embodiments are applicable to numerous X-ray imaging systems implementing an X-ray tube, such as X-ray radiography (RAD) imaging systems, X-ray mammography imaging systems, fluoroscopic imaging systems, tomographic imaging systems, or computed tomography (CT) imaging systems. The following discussion of the X-ray imaging system 100 is merely an example of one such implementation and is not intended to be limiting in terms of modality.

The X-ray imaging system 100 may be configured as one or more of an interventional radiography imaging system, a mammography imaging system, a fixed or mobile RAD imaging system, and so on. Particularly, the X-ray imaging system 100 is configured to image a subject 112 such as a patient, an inanimate object, one or more manufactured parts, and/or foreign objects such as dental implants, stents, and/or contrast agents present within the body. In one embodiment, the X-ray imaging system 100 includes a gantry 102, which in turn, may further include at least one X-ray source 104 configured to project a beam of X-ray radiation for use in imaging the subject 112 laying on a table 114. Specifically, the X-ray source 104 is configured to project the X-ray radiation beams towards a detector assembly 108 positioned on the opposite side of the gantry 102. In certain embodiments, the X-ray source 104 is configured to traverse different angular positions around the subject 112 for acquiring desired projection data. Accordingly, the gantry 102 and the components mounted thereon may be configured to rotate about a center of rotation 106 for acquiring the projection data, for example, at different energy levels. Alternatively, in embodiments where a projection angle relative to the subject 112 varies as a function of time, the mounted components may be configured to move along a general curve rather than along a segment of a circle.

Although FIG. 1 depicts a single X-ray source 104, in certain embodiments, multiple X-ray tubes and detectors may be employed to project a plurality of X-ray radiation beams for acquiring projection data at different energy levels corresponding to the patient. In some embodiments, the X-ray source 104 may enable dual-energy gemstone spectral imaging (GSI) by rapid peak kilovoltage (kVp) switching. In some embodiments, the X-ray detector employed is a photon-counting detector which is capable of differentiating X-ray photons of different energies. In other embodiments, two sets of X-ray tubes and detectors are used to generate dual-energy projections, with one set at low-kVp and the other at high-kVp. It should thus be appreciated that the methods described herein may be implemented with single energy acquisition techniques as well as dual energy acquisition techniques.

In some CT imaging system configurations, an X-ray tube projects a cone-shaped X-ray radiation beam which is collimated to lie within an X-Y-Z plane of a Cartesian coordinate system and generally referred to as an "imaging plane." The X-ray radiation beam passes through an object being imaged, such as the patient or subject. The X-ray radiation beam, after being attenuated by the object, impinges upon an array of detector elements. The intensity of the attenuated X-ray radiation beam received at the detector assembly is dependent upon the attenuation of a radiation beam by the object. Each detector element of the array produces a separate electrical signal that is a measurement of the X-ray beam attenuation at the detector location. The attenuation measurements from all the detector elements are acquired separately to produce a transmission profile.

In some CT systems, the X-ray tube and the detector assembly are rotated with a gantry within the imaging plane and around the object to be imaged such that an angle at which the radiation beam intersects the object constantly changes. A group of X-ray radiation attenuation measurements, e.g., projection data, from the detector assembly at one gantry angle is referred to as a "view." A "scan" of the object includes a set of views made at different gantry angles, or view angles, during one revolution of the X-ray tube and detector. It is contemplated that the benefits of the methods described herein accrue to medical imaging modalities other than CT, so as used herein the term "view" is not limited to the use as described above with respect to projection data from one gantry angle. The term "view" is used to mean one data acquisition whenever there are multiple data acquisitions from different angles, whether from a CT, positron emission tomography (PET), or single-photon emission CT (SPECT) acquisition, and/or any other modality including modalities yet to be developed as well as combinations thereof in fused embodiments.

The projection data is processed to reconstruct an image that corresponds to a two-dimensional slice taken through the object or, in some examples where the projection data includes multiple views or scans, a three-dimensional rendering of the object. One method for reconstructing an image from a set of projection data is referred to in the art as the filtered back projection technique. Transmission and emission tomography reconstruction techniques also include statistical iterative methods such as MLEM and ordered-subsets expectation-reconstruction techniques as well as iterative reconstruction techniques. This process converts the attenuation measurements from a scan into integers called "CT numbers" or "Hounsfield units," which are used to control the brightness of a corresponding pixel on a display device.

FIG. 2 shows further detail of the X-ray imaging system 100 of FIG. 1 in a block diagram 200. As shown in FIG. 2, X-ray imaging system 100 includes the X-ray source 104 configured to project a beam of X-rays 206 through the subject 112. The subject 112 may include a human subject, pieces of baggage, or other objects desired to be scanned. The X-ray source 104 may be one or more X-ray tubes producing X-rays 206 having a spectrum of energies that range, typically, from thirty (30) keV to two hundred (200) keV. The X-rays 206 pass through the subject 112 and, after being attenuated, impinge upon an array of detectors 208 of the detector assembly 108. Each detector module in the detector assembly 108 produces an analog electrical signal that represents the intensity of an impinging X-ray beam, and hence the attenuated beam, as it passes through the subject 112. In one embodiment, detector assembly 108 is a scintillator-based detector assembly that may be implemented as an energy integrating detector, however, it is also envisioned that direct-conversion type detectors or photon counting detectors (e.g., CdTe, CZT, Si detectors, etc.) may also be implemented.

The X-ray imaging system 100 includes an X-ray controller 210 that provides power and timing signals to the X-ray source 104. The X-ray imaging system 100 may further include a gantry motor controller 212 that controls a rotational speed and position of the gantry 102. In some examples, the X-ray imaging system 100 may include a table motor controller 226 configured to control a position of the table 114 on which the subject 112 is positioned (e.g., via one or more motors of the table 114). Rotation of the gantry 102 and operation of the X-ray source 104 are governed by a computing device 216 of the X-ray imaging system 100. The computing device 216 may include a processor 222 that is configured to send and receive signals to and from one or more of the X-ray controller 210, the gantry motor controller 212, and the table motor controller 226. Further, the computing device 216 may receive signals from the detector assembly 108 and generate an image corresponding to the subject 112 being scanned. The X-ray imaging system 100 may include an image reconstructor 230 configured to receive sampled and digitized X-ray data (e.g., from a data acquisition system of the computing device 216) and perform high speed image reconstruction. A reconstructed image may be applied as input to the computing device 216, and stored in a storage device 218.

The computing device 216 communicates with the processor 222 to enable an operator, using an operator console 220, to control the scanning parameters and to view the generated image. That is, the operator console 220 includes some form of operator interface, such as a keyboard, mouse, voice activated controller, or any other suitable input apparatus that allows an operator to control the X-ray imaging system 100 and view the reconstructed image or other data from the computing device 216 on a display unit 232. Additionally, the operator console 220 allows an operator to store the generated image in a storage device 218 which may include hard drives, floppy discs, compact discs, etc. The operator may also use the operator console 220 to provide commands and instructions to the computing device 216 for controlling an X-ray controller 210 that provides power and timing signals to the X-ray source 104.

FIG. 3 shows a portion of an X-ray source 300. A rotational axis 350 and a radial axis 352 are provided in FIGS. 3-7, 9, 11, and 13-15 for reference, where the rotational axis 350 may be parallel with the y-axis and the radial axis 352 may be parallel with the z-axis. The X-ray source 300 shown in FIG. 3 serves as an example of the X-ray source 104 depicted in FIGS. 1 and 2. As such, the X-ray source shown in FIG. 3 may include functional and/or structural features from the X-ray source 104, shown in FIGS. 1 and/or 2, or vice versa. Furthermore, alternate embodiments combining features from one or more of the systems have also been envisioned.

The X-ray source 300 includes a housing 302 having a low-pressure enclosure 304 (e.g., vacuum enclosure) formed therein. It will be understood that a low-pressure enclosure infers a comparatively low-pressure relative to atmospheric pressure (e.g., ambient pressure). As such, the pressure in the enclosure may be less than atmospheric.

The X-ray source 300 includes a hydrodynamic bearing system 305 with a sleeve 306 and a shaft 308. One of the sleeve 306 and the shaft 308 may be a rotational component and the other a stationary component. An X-ray source target 310 may be coupled to the rotational component. In the illustrated example, the sleeve 306 is a rotational component and the shaft 308 is a stationary component. However, embodiments in which the sleeve 306 is a stationary component and the shaft 308 is a rotational component, have been contemplated. In such an example, the X-ray source target 310 may be coupled to the shaft 308 as opposed to the sleeve 306. It will be understood that the motion denoted by the descriptors stationary and rotational denote the relative motion between the components. However, as previously discussed, the X-ray source may be integrated into a moving structure. For instance, in the CT imaging system use-case, the X-ray source may be integrated into a rotating gantry. As such, in smaller scale frame of reference, the shaft is stationary relative to the sleeve but in a larger scale frame of reference, both components exhibit similar rotational motion in the gantry. However, in alternate use-case scenarios, the X-ray source may be integrated into a stationary structure in regard to the larger scale frame of reference.

The shaft 308 is shown attached (e.g., fixedly coupled) to the housing 302 at a first axial end 314. In some embodiments, the shaft 308, at a second axial end opposing the first axial end 314, may be attached to the housing 302 or other suitable X-ray source component. In this embodiment, the bearing system is formed as a straddle bearing system. However, system embodiments where the shaft 308 is only coupled at one axial end, forming a cantilever arrangement, have been envisioned.

The hydrodynamic bearing system 305 includes a plurality of hydrodynamic bearings including a journal bearing 316, a first thrust bearing 318, and a second thrust bearing 319. The first thrust bearing 318 and the second thrust bearing 319 are positioned on opposite axial sides of a flange 342 of the shaft 308. The system may however include additional bearings obscured from view in FIG. 3. The journal bearing 316 is designed to support radial loads and the thrust bearing 318 is designed to support axial loads. In this way, loads on the sleeve 306 are managed to enable efficient rotation thereof, where efficiency may be related to rotational output (e.g., angular speed, torque, etc.) compared to a given driving force.

Each of the bearings include an interface 320 in which a working fluid (e.g., liquid metal such as a gallium-indium-tin liquid) serving as a lubricant and supporting loads. The thickness of the interface 320 may be selected based on factors such as the type of liquid metal or other working fluid used in the bearing, manufacturing tolerances of the components, expected system operating temperature, etc. Thus, in one or more use-case examples, the liquid metal interface 320 may be on the order of 5 microns (µm) - 40 µm. In one or more examples, the liquid metal used as the working fluid in the bearing assembly may include gallium, tin, indium, combinations thereof, etc. However, working fluid other than liquid metal have been envisioned such grease, oil, combinations thereof, etc.

In the illustrated embodiment, the X-ray source target 310 is coupled (e.g., rotationally coupled) to the sleeve 306. However, abovementioned embodiments with the X-ray source target 310 coupled instead to rotational shaft assemblies have been envisioned. The X-ray source target 310 includes a focal spot 322 serving as a surface receiving a beam of electrons from a cathode 324, during X-ray source 300 operation.

The cathode 324 may receive signals from a controller, such as the X-ray controller 210 shown in FIG. 2, to generate an electron beam directed toward a surface of the X-ray source target 310. An X-ray beam 326 is generated when the electron beam from the cathode 324 strikes the focal spot 322 of the X-ray source target 310. The X-rays are emitted through an X-ray window 328 (e.g., opening) in the housing 302.

A rotor 330 and a stator 332 are also provided in the X-ray source 300. The rotor 330 is coupled to the sleeve 306, in the illustrated embodiment, and is designed to impart rotational motion thereto. However, in abovementioned embodiments where the shaft rotates, the rotor may be coupled to the shaft. The stator 332 is shown positioned external to the low-pressure enclosure 304 (e.g., external to the housing 302). However, other suitable stator locations have been envisioned. Typically, the rotor and stator can include windings, magnets, electrical connections, etc., electromagnetically interacting to generate rotor rotation responsive to receiving control commands from for example, the X-ray controller 210 shown in FIG. 2.

FIG. 4 shows another example of a hydrodynamic bearing system 400. It will be appreciated that the bearing system 400, shown in FIG. 4, may be included in the X-ray sources described above with regard to FIGS. 1-3. The hydrodynamic bearing system 400 includes a shaft 402 and a sleeve 404. An X-ray source target 406 is shown attached to the sleeve 404. Thus, during system use, the sleeve 404 rotates while the shaft 402 remains relatively stationary. However, as previously mentioned, embodiments where the sleeve is kept stationary and the shaft rotates, have been envisioned.

The hydrodynamic bearing system 400 includes a plurality of bearings. Each of the bearings includes a fluid interface 408 (e.g., liquid metal interface) between a section of the shaft 402 and the sleeve 404. It will be understood that the fluid interfaces circumferentially extend around the shaft 402. The bearings include a first journal bearing 410, a second journal bearing 412, a first thrust bearing 414, and a second thrust bearing 415, in the illustrated embodiment. However, other bearing arrangements for the system such as arrangements with a different amount of journal and/or thrust bearings have been envisioned. The journal bearings support radial loads and the thrust bearings support axial loads.

The shaft 402 is shown with herringbone grooves 416 associated with the first and second journal bearings 410 and 412. The sleeve 404 may also include grooves (e.g., spiral grooves), schematically depicted at 418. These grooves (e.g., herringbone and spiral grooves) may work in conjunction to generate pressure in the working fluid (e.g., liquid metal) to support the bearing load. The support to the bearing load may prevent the rotational component from contacting the stationary component. It will therefore be understood that the bearings described herein may be self-acting bearings designed to generate pressure using the surface geometries at the bearing interface. Varying geometry and arrangements of the grooves, as well as corresponding flow dynamics, are described further below.

The first thrust bearing 414 and the second thrust bearing 415 include a flange 420 radially extending from a body 422 of the shaft 402 toward a complimentary section 424 in the sleeve body. The first thrust bearing 414 and the second thrust bearing 415 may be on opposite axial sides across the flange 420. The bearing system 400 may also include a reservoir 426 positioned between the first journal bearing 410 and the second journal bearing 412. The reservoir 426 may be formed as a groove with an annular shape allowing for an additional volume of the working fluid (e.g., the liquid metal) to be maintained in the bearings, if desired.

The hydrodynamic bearing system 400 may further include one or more seals designed to reduce the amount of fluid leaking from the bearings. The seals may be rotating labyrinth seals providing a circuitous path impeding liquid metal flow in axial directions. However, additional or alternate types of suitable seals or combinations of seals have been contemplated such as capillary seals, hydrodynamic seals, flange seals, foil seals, etc. As an example, a first seal 428 is shown positioned axially outward from the first journal bearing 410, reducing (e.g., preventing) lubricant flow past the first seal 428 in a direction indicated generally by arrow 429. As another example, a second seal 430 is shown positioned axially outward from the thrust bearing 414, reducing (e.g., preventing) lubricant flow past the second seal 430 in a direction indicated generally by arrow 432. However, other seal configurations are also possible without departing from the scope of the present disclosure.

Hydrodynamic bearings may experience thermal and structural deformation during operation (e.g., rotation of the rotational component such as the sleeve) according to a thermal profile generated and material properties of the components (e.g., shaft, sleeve, and liquid metal lubricant) of the bearing, as well as a load imposed on the bearing.

For example, turning to FIG. 5, an exemplary thermal and structural deformation pattern 550 is shown for a hydrodynamic bearing 500 including a sleeve 504 circumferentially surrounding a shaft 502 with a gap 508 therebetween. The hydrodynamic bearing 500 may be modified according to the thermal and structural deformation pattern 550 to produce a modified hydrodynamic bearing in accordance with the present disclosure such as by executing the method disclosed herein.

In the figures, the sleeve 504 is shown as a cross section for visibility of the shaft 502. The sleeve 504 and the shaft 502 extend between a first end 552 and a second end 554, where the second end 554 is axially opposite the first end 552, with respect to the shaft 502 and components and/or features thereof or coupled thereto. The rotational axis 350 extends centrally through the shaft 502 and the sleeve 504 such that the shaft 502 and the sleeve 504 are concentric with each other when under a low load (e.g., when a gantry such as gantry 102 of FIG. 1 is stationary). The rotational axis 350 which extends centrally through the shaft 502 may be slightly shifted or offset from the center of the sleeve 504 when under a high load (e.g., when the gantry is rotating) such that the shaft 502 and the sleeve 504 are eccentric.

The shaft 502 may include a flange 532, similar to the flange 420 of FIG. 4. The shaft 502 is simplified in FIGS. 5-7, 9, and 11-15 for clarity, however it will be understood that the shaft 502 and/or the sleeve 504 may further include other features described herein, such as the reservoir 426 of FIG. 4. Further, the shaft 502 and the sleeve 504 may comprise one or more journal and/or thrust bearings, as described above.

An outer diameter 512 of an outer surface 518 of the shaft 502 may be axially constant (e.g., the same as measured at any axial position) when not under operating conditions (e.g., when rotationally stationary). Additionally, an inner diameter 514 of an inner surface 522 of the sleeve 504 may be axially constant when not under operating conditions. Therefore, the outer surface 518 and the inner surface 522 may be cylindrical when not under operating conditions. Further, a radial thickness 520 of the gap 508 wherein the lubricant fluid flows may be axially constant when not under operating conditions.

The stationary component, for example the shaft 502, may include grooves 506 (e.g., on the outer surface 518) which, similar to the grooves 416 of FIG. 4, may be configured to generate pressure in the gap 508 wherein a lubricant fluid (e.g., liquid metal) is disposed. The grooves 506 may be arranged in a herringbone pattern as shown, or other arrangement. For example, an alternative groove pattern may include curved grooves in wave or spiral patterns. Grooves may be formed additionally or alternatively in the rotational component (e.g., the sleeve 504). The grooves of the rotational and stationary components may be arranged in different patterns.

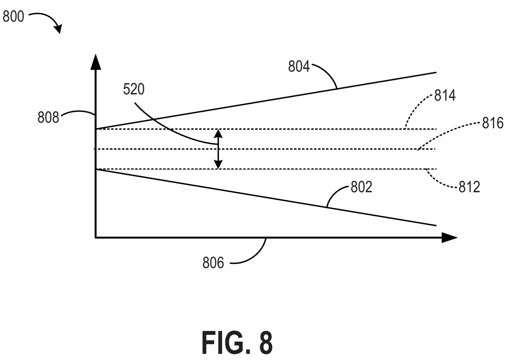

A shaded region 510 indicates the expected thermal and structural deformation pattern 550 experienced by the sleeve 504 according to a thermal profile generated by operation of the hydrodynamic bearing 500 (e.g., relative rotational motion of the shaft 502 and the sleeve 504). That is, the shaded region 510 may comprise material of the sleeve 504 prior to operation (e.g., rotation), and negative space during operation. To elaborate, in the example thermal and structural deformation pattern 550 shown in FIG. 5, the sleeve 504 is altered under operating conditions such that the cylindrical inner surface 522 of the sleeve 504 having the axially constant inner diameter 514 shifts to a conical inner surface 524 having an axially varying inner diameter 516 under operating conditions due to the thermal profile generated during operation. More generally, the shape of the sleeve 504 is changed due to thermal and structural deformation such that the inner diameter thereof is axially varied. An example of modification to a depth of the grooves 506 is provided in FIGS. 7 and 8 to counteract the effects of the thermal and structural deformation pattern 550 on the forces imposed on the lubricant fluid disposed in the gap 508 which may result in lubricant starvation.

The thermal and structural deformation intensity increases toward the second end 554 as more heat may be accumulated near the flange 532. However, with other shaft and/or sleeve geometry, and operating conditions, the thermal and structural deformation pattern may vary. Further, other thermal profiles may be possible for the same bearing under different operational conditions (e.g., rotational speed, load, location within system, etc.) or when included in different systems. For instance, under thermal and structural deformation, the inner diameter of the sleeve 504 may fluctuate axially with a non-linear profile, rather than linear as shown in FIG. 5. The linear or non-linear profile may be axially asymmetric. That is, the thermal and structural deformation pattern 550 may be asymmetric across an x-z plane at an axial midpoint of the axial length 540 of the sleeve 504. In this way, the lubricant fluid may be pumped axially out of the bearing.

As an example, turning to FIG. 6, another expected thermal and structural deformation pattern 650 is shown for the hydrodynamic bearing 500. The thermal and structural deformation pattern 650 and the thermal and structural deformation pattern 550 may differ due to different system configurations and/or operating conditions, such as rotational speed of the sleeve 504, torque load, mass or geometrical differences in components to which the shaft 502 and the sleeve 504 are coupled to, etc. However, like the thermal and structural deformation pattern 550, the thermal and structural deformation pattern 650 may be asymmetric across a plane at an axial midpoint of the axial length 540. The hydrodynamic bearing 500 may be modified according to the thermal and structural deformation pattern 650 to produce a modified hydrodynamic bearing in accordance with the present disclosure such as by executing the method disclosed herein.

A shaded region 610 indicates the thermal and structural deformation pattern 650 experienced by the sleeve 504 according to a thermal profile generated by operation of the hydrodynamic bearing 500 (e.g., relative rotational motion of the shaft 502 and the sleeve 504). That is, the shaded region 610 may comprise material of the sleeve 504 prior to operation (e.g., rotation), and negative space during operation. To elaborate, in the example thermal and structural deformation pattern 650 shown in FIG. 6, the sleeve 504 is altered such that the cylindrical inner surface 522 of the sleeve 504 having the axially constant inner diameter 514 shifts to a curved inner surface 624 having an axially varying inner diameter 616 under operating conditions due to the thermal profile generated during operation. More generally, similar to as shown in FIG. 5, the shape of the sleeve 504 is changed due to thermal and structural deformation such that the inner diameter thereof is axially varied. However, the profile of the thermal and structural deformation pattern 650 is different than the thermal and structural deformation pattern 550 of FIG. 5, which may be accounted for by different operational conditions (e.g., rotational speed, load, etc.) under which the bearing 500 is expected to operate.

Thus, the sleeve 504 may be thermally deformed in various ways according to geometry thereof and operating conditions. Additionally or alternatively, the shaft 502 may be thermally deformed. That is, in other examples, only the shaft 502, or both the shaft 502 and the sleeve 504 may experience thermal and structural deformation. In any configuration of thermal and structural deformation experienced by the bearing 500, the geometry of the gap 508 may change. Structural deflections due to a load on the bearing 500 may also contribute to altered geometry of the gap 508 during rotation. For example, such thermal and structural deformation experienced by one or both of the shaft 502 and the sleeve 504 may cause a change in radial dimensions and/or shape of the gap 508, leading to an unintended flow pattern of lubricant fluid (e.g., liquid-state metal) therein. To elaborate, the grooves 506 may be arranged during manufacturing so as to direct fluid throughout the gap 508 in a desired flow pattern. However, when the geometry of the gap 508 is changed under thermal and structural deformation during operation, an unintended fluid pattern that is different than the desired flow pattern occurs. In some examples, the unintended flow pattern may result in the lubricant fluid being pumped out of the bearing 500, resulting in wear, inadequate damping and stiffness properties, and/or other consequences of lubricant starvation.

The hydrodynamic bearing of the present disclosure may be modified based on an expected thermal and structural deformation profile to counteract effects of the thermal and structural deformation on lubricant flow, thereby maintaining more (e.g., all) of the lubricant within the bearing. To elaborate, features of the hydrodynamic bearing of the present disclosure may depend on the expected thermal and structural deformation profile of a conventional bearing under expected operating conditions within a system such as an imaging system. For example, the expected thermal and structural deformation profile may be determined by predicted modeling and/or empirical testing of an unmodified (e.g., conventional) bearing, and used to establish appropriate modifications to the sleeve and/or shaft, as described further below with regard to the method of FIG. 16. Thus, the thermal and structural deformation patterns shown in FIGS. 5 and 6 serve as non-limiting examples of expected thermal and structural deformation profiles for purposes of illustrating the relationship between the thermal and structural deformation profiles of FIGS. 5 and 6 and the corresponding hydrodynamic bearing examples in accordance with the present disclosure described with regard to FIGS. 7-10. Because the expected thermal and structural deformation pattern may be axially asymmetric, the modifications may be axially asymmetric as described further below to neutralize the axial pumping effect of the thermal and structural deformation pattern. Additional examples of hydrodynamic bearings in accordance with the present disclosure are shown in FIGS. 11-15, which may correspond to different thermal and structural deformation patterns.

Turning to FIGS. 7 and 8, an example of a bearing 700 having a groove depth 704 varied axially according to a thermal and structural deformation pattern is illustrated in FIG. 7 and a graph 800 of the groove depth 704 is shown in FIG. 8. The groove depth 704 may be a radial distance whereby the groove 506 is recessed from the outer surface 518. A view 750 shown in FIG. 7 may be a y-z cross section coplanar with the rotational axis 350.

The view 750 shows the sleeve 504 and a shaft 702 which is modified compared to the shaft 502 of FIGS. 5 and 6 according to the thermal and structural deformation pattern 550. Specifically, the groove depth 704 pattern shown in FIGS. 7 and 8 may correspond to the thermal and structural deformation pattern 550. In this way, the bearing 700 shown in FIG. 7 may be a modified bearing in accordance with the present disclosure, where the modifications are selected according to the expected thermal and structural deformation pattern 550. Therefore, operating the bearing 700 under the operating conditions which give rise to the thermal and structural deformation pattern 550 on the bearing 500 may result in decreased fluid loss compared to operating the bearing 500 under the same operating conditions.

The graph 800 includes the groove depth 704 and the thermal and structural deformation pattern 550 represented as a first trace 802 and a second trace 804, respectively. Axial position may increase to the right along a horizontal axis 806 (e.g., from the first end 552 to the second end 554) and radial position may increase upwards along a vertical axis 808 (e.g., from the axis 350 radially outward). A first reference trace 812 shows the radial profile of the outer surface 518 of the shaft 502 when not under operating conditions. As such, the groove depth may be zero when the trace 802 is at the reference trace 812, and the trace 802 may not extend above the reference trace 812. A second reference trace 814 shows the radial profile of the inner surface 522 of the sleeve 504 when not under operating conditions (e.g., when not thermally deformed). The space between the first and second reference traces 812, 814 represents the gap 508 radially interposed between the sleeve 504 and the shaft 702. As such, the first and second reference traces 812, 814 are spaced away from each other by a distance equal to the radial thickness 520.

Though the groove depths 704 are discrete measurements, the first trace 802 is shown as continuous to represent all combinations of grooves independent of the groove arrangement (e.g., herringbone, spiral, number of grooves, spacing of grooves, etc.). That is, points representing the groove depths may fall anywhere along the trace 802 according to the groove 506 arrangement. For example, if groove widths 706 and/or distances 708 between axially adjacent grooves 506 are different than shown in FIG. 7, the groove depths 704 may be adjusted such that the groove depths retain the profile shown by the trace 802 in order to similarly reduce effects of the thermal and structural deformation pattern 550. The groove depths 704 may be circumferentially (e.g., radially) constant, such that for a given axial point along the horizontal axis 806, the groove depth 704 is represented in the graph 800 for any circumferential position on the shaft 702.

As shown in the view 750 and the graph 800, the depth 704 of the grooves 506 varies axially. That is, the trace 802 is not a horizontal line, parallel with the horizontal axis 806. Thus, the depths of the grooves 506 are not the same in the modified shaft 702 as the shaft 502. Further, the groove depth profile indicated by the trace 802 is a mirror image of the thermal and structural deformation profile indicated by the trace 804 across a third reference trace 816 equidistantly between the first and second reference traces 812, 814. In this way, the groove depth and magnitude of thermal deformation may be directly proportional. As such, the groove depths 704 is axially asymmetric. Although shown as linear, the reference traces 812, 814 may be nonlinear, for example in cases where the shaft and/or the sleeve are contoured to have axially varying dimensions (e.g., diameters) as described below. Further, the graph 800 represents the bearing when not under operating conditions (e.g., when the rotational component is stationary), and when under operating conditions, eccentricity may be experienced such that the reference traces 812, 814 are a different distance apart than the radial thickness 520.

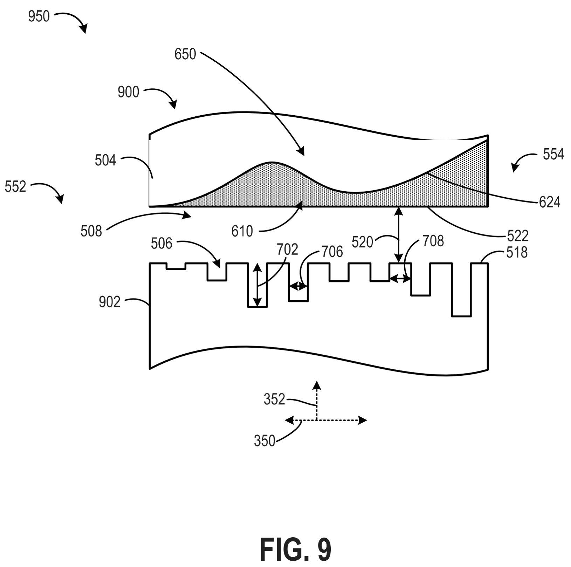

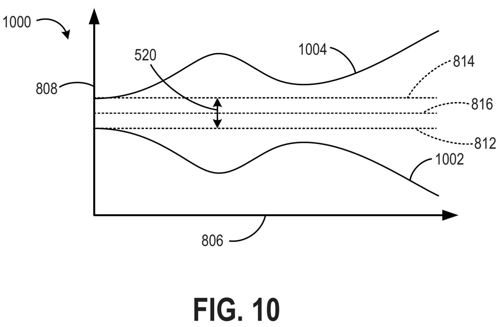

FIGS. 9 and 10 respectively show another example of a bearing 900 where the groove depth 704 is varied axially according to a thermal and structural deformation pattern, and a graph 1000 of the groove depth 704. Specifically, the groove depth 704 pattern shown in FIGS. 9 and 10 may correspond to the thermal and structural deformation pattern 650 of FIG. 6. A view 950 shown in FIG. 9 may be a y-z cross section coplanar with the rotational axis 350.

The view 950 shows the sleeve 504 and a shaft 902 which is modified compared to the shaft 502 of FIGS. 5 and 6 according to the thermal and structural deformation pattern 650. Specifically, the groove depth 704 pattern shown in FIGS. 9 and 10 may correspond to the thermal and structural deformation pattern 650. In this way, the bearing 900 may be a modified bearing in accordance with the present disclosure, where the modifications are selected according to the expected thermal and structural deformation pattern 650. Therefore, operating the bearing 900 under the operating conditions, which give rise to the thermal and structural deformation pattern 650 on the bearing 500, may result in decreased fluid loss compared to operating the bearing 500 under the same operating conditions.

Though the grooves 506 are shown with rectangular profiles in FIGS. 7 and 9, the grooves 506 may also have other cross-sectional shapes in other examples. For example, rather than right angle corners the grooves 506 may have rounded profiles. Further, different ratios of the width 706 to the distance 708 are possible. Further still, the width 706 may be adjusted additionally or alternatively to the depth 704 to counteract thermal and structural deformation effects on lubricant fluid flow.

The graph 1000 includes the groove depth 704 and the thermal and structural deformation pattern 650 represented as a first trace 1002 and a second trace 1004, respectively. Similar to the first trace 802 of FIG. 8, the first trace 1002 of FIG. 10 is shown as a continuous line for purpose of representing groove depths for any groove arrangement (e.g., number, spacing, widths, etc.).

As shown in the view 950 and the graph 1000, the depth 704 of the grooves 506 varies axially. Further, the groove depth profile indicated by the trace 1002 is a mirror image of the thermal and structural deformation profile indicated by the trace 1004 across the third reference trace 816. Further still, the groove depth profile is axially asymmetric, which results in the counter effect to the axial pumping of lubricant fluid (e.g., liquid metal) imposed by the thermal and structural deformation.

For a given thermal a structural deformation profile, there may be more than one possible corresponding groove depth profile. That is, the groove depth profile may not be a mirror image of the expected thermal and structural deformation profile.

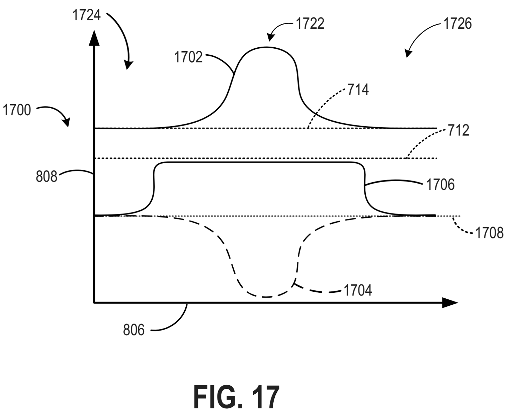

Turning to FIG. 17, another example of a graph 1700 of an expected thermal and structural deformation profile is shown with corresponding groove depth profiles for comparison. An unmodified (e.g., axially constant) groove depth is represented by a reference line 1708. The expected thermal and structural deformation profile is represented as a first trace 1702. A first groove profile and a second groove profile are shown as a second trace 1704 and a third trace 1706, respectively. As described above and indicated by the second trace 1704, the grooves may be made deeper at deformed areas with more significant thermal and structural deformation (e.g., a deformed area 1722). In such an example, the grooves may remain unmodified in undeformed areas with no expected thermal or structural deformation (e.g., a first undeformed area 1724 and a second undeformed area 1726). Alternatively, as indicated by the third trace 1706, the grooves in areas where thermal and structural deformation is experienced (e.g., the deformed area 1722) may be made shallower, thereby reducing pumping strength of that area. In this way, undeformed areas may balance the effect on lubricant pumping caused by the deformed areas. In some examples, the undeformed areas may dominate the pumping characteristics such that the pressure contribution of the deformed areas to lubricant pumping changes negligibly (e.g., 5% or less) from the undeformed state (e.g., when stationary) to the thermally and structurally deformed state (e.g., during rotation). In addition to reducing groove depth at the deformed areas, the grooves at the undeformed areas may be made deeper to further ensure that the undeformed areas dominate the pumping characteristics.

Thus, according to an expected thermal and structural deformation pattern for an unmodified bearing under a set of operating conditions, the groove depth may be modified to vary axially according to the thermal and structural deformation profile to produce a hydrodynamic bearing of the present disclosure where lubricant fluid is less likely to leak therefrom. Other modifications to produce a hydrodynamic bearing in accordance with the present disclosure are described below with reference to FIGS. 11-15.

Turning to FIG. 11, a shaft 1102 is shown. The shaft 1102 includes the grooves 506 arranged in a herringbone pattern which can be conceptually divided into sections. The sections include a first section 1112, a second section 1114, a third section 1116, and a fourth section 1118, delineated by the dashed vertical lines 1142 therebetween. The sections of a herringbone groove pattern such as shown in FIG. 11 may be divided by regions where segments of the grooves 506 are linear and parallel. In this way, the section borders (e.g., at the dashed vertical lines 1142) may extend through apexes of the herringbone grooves. In other examples where the grooves are not arranged in a herringbone pattern, the sections may be divided according to other features of the groove pattern. For example, section boundaries may be set at points of inflection for curved (e.g., sinusoidal) grooves.

The first section 1112, the second section 1114, the third section 1116, and the fourth section 1118 have a first axial length 1122, a second axial length 1124, a third axial length 1126, and a fourth axial length 1128, respectively. The sections 1112, 1114, 1116, 1118 may all be approximately the same length in some examples. That is, the lengths 1122, 1124, 1126, 1128 may all be approximately equal. Alternatively, the lengths 1122, 1124, 1126, 1128 may be different from each other. For instance, the first axial length 1122 may be longer or shorter than one or more of the second axial length 1124, the third axial length 1126, and the fourth axial length 1128. As an example, the second axial length 1124 may be greater than the first axial length 1122 while the third and fourth axial lengths 1126, 1128 may be approximately equal to each other. In another example, the fourth axial length 1128 may be greater than the third axial length 1126 while the first and second axial lengths 1122, 1124 may be approximately equal to each other. In another example, a sum of the first and third axial lengths 1122, 1126 may be greater or less than a sum of the second and fourth axial lengths 1124, 1128.

The lengths 1122, 1124, 1126, 1128, ratios thereof and/or ratios of sums thereof, etc. may be chosen according to the expected thermal and structural deformation pattern (e.g., thermal and structural deformation pattern 550 or 650 of FIGS. 5 and 6, respectively) and/or pressure generated in the liquid metal interface. For example, a section expected to experience a greater degree of thermal and structural deformation may be made relatively longer than a section expected to experience relatively less thermal and structural deformation (or none at all) in order to counteract the effects of the thermal and structural deformation on pumping strengths. Lengthening a section may increase the pumping strength of the section. Shortening a section may decrease the pumping strength of that section. As an example, if a greater amount of thermal and structural deformation is expected in the second section 1114 than the first section 1112, pumping effects of the second section 1114 may be weakened compared to the first section 1112 due to the wider gap. As such, the second axial length 1124 may be made relatively longer than the first axial length 1122 by shortening the first axial length 1122 and/or extending the second axial length 1124. In this way, pumping effects of the first and second sections 1112, 1114 may be more equal under operating conditions (e.g., in a thermally deformed and structurally loaded state). Similar to the groove depth, the section length of a section not expected to experience effects of a thermal and structural deformation pattern may be adjusted to offset the effect of the thermal and structural deformation. For example, if the bearing is expected to experience thermal and structural deformation such that pumping strength increases in the second section 1114 and remains the same in the other sections, the second section 1114 may be made shorter, and/or the other sections may be made longer in order to counteract the thermal and structural deformation effect on the fluid flow.

As the thermal and structural deformation pattern may be axially asymmetric (e.g., asymmetric across a plane at the axial midpoint), the corresponding modified section lengths may also be axially asymmetric. For example, the first and fourth axial lengths 1122, 1128 may not be equal to each other and the second and third axial lengths 1124, 1126 may not be equal to each other. In this way, axial pumping may be designed to occur in an opposite axial direction from the expected thermal and structural deformation pattern, thereby preventing fluid from being pumped out of the bearing under operating conditions.

Additionally or alternatively to varying section lengths, a groove angle 1140 of the grooves 506 may be modified to vary axially. The groove angle 1140 may be an acute angle of the referenced groove with an axis parallel to the rotational axis 350. For example, the groove angle 1140 may be different by section. More specifically, the groove angle 1140 may be modified in areas where greater thermal and structural deformation is expected in order to increase pressure in such areas. Additionally or alternatively, the groove angle 1140 may be modified in areas where less (including zero) thermal and structural deformation is expected in order to decrease pressure in such areas. The relationship between groove angle and pressure may vary non-monotonically. That is, an increase in groove angle may increase pressure in some examples and decrease pressure in other examples, according to the initial (e.g., unmodified) groove angle, the groove pattern (e.g., section lengths), the thermal and structural deformation pattern, etc.

The sections may have different groove depths such that a stair step or other discontinuous groove depth profile is formed, as opposed to the continuous groove depth profiles described with reference to FIGS. 7-10. In this way, in some examples, the groove segments within each section may have the same depth, but groove segments of different sections may have different depths. The section groove depths may vary additionally or alternatively to the section lengths. For instance, the section lengths may be uneven in an example where the groove depth is axially constant. The section lengths may be even in an example where the groove depth of each section is different. As an alternative example, each section may have a length and groove depth different from one or more of the other sections.

To illustrate, turning to FIG. 12, a graph 1200 is shown of a groove depth profile indicated by a trace 1202 where the groove segments of different sections have different depths. The trace 1202 is discontinuous at the dashed vertical lines 1142 which indicate section borders such that groove depth changes abruptly at the section transition rather than continuously as in the examples of FIGS. 7-10. Other combinations of relative section groove depths are also possible, according to the corresponding expected thermal and structural deformation pattern. Further, although four sections are illustrated in FIGS. 11 and 12, there may be more or fewer than four sections in other examples, according to the groove arrangement, shaft dimensions (e.g., diameter and axial length), etc.

Further, returning to FIG. 7, a land to groove ratio equivalent to a ratio of the axial distance 708 between the grooves 506 to the groove width 706 may vary axially according to the expected thermal and structural deformation pattern, such as the thermal and structural deformation pattern 550 shown therein. For example, the groove width 706 may be made larger and/or the axial distance 708 may be made shorter in a region where relatively greater thermal and structural deformation is expected such as at the second end 554 in the thermal and structural deformation pattern 550. Additionally or alternatively, the groove width 706 may be made smaller and/or the axial distance 708 may be made longer in a region where relatively less thermal and structural deformation is expected. Like the groove depth 704, the groove width 706 and the axial distance 708 may have continuous or discrete (e.g., section based) profiles.

Moreover, in some examples, a cross-sectional shape of the grooves 506 may be modified to vary axially according to an expected thermal and structural deformation pattern. For example, corners of the grooves 506 may be rounded with varying corner radii to affect pressure on the lubricant fluid in the gap 508 so as to counteract effects of the thermal and structural deformation. The corners at an open end of the grooves 506 and/or a closed end of the grooves 506 may be modified (e.g., rounded). The cross-sectional shape may therefore be rectangular with sharp (e.g., 90-degree) corners, as shown, rectangular with curved corners, or any other shape which affects pressure in the lubricant fluid in a way that offsets the thermal and structural deformation pattern. For example, the grooves 506 may be modified to taper radially inward, forming a trapezoidal or triangular cross-sectional shape. The cross-sectional shape may be different for each of the grooves. Alternatively, the cross-sectional shape may be the same for grooves within the same section.

Further, in some examples, it may be that one or more sections are modified to lack grooves in order to counteract an expected thermal and structural deformation pattern. For example, turning to FIG. 13, a shaft 1302 including sections without grooves is shown. The shaft 1302 includes the first section 1112, the second section 1114, the third section 1116, and the fourth section 1118, delineated by the dashed vertical lines 1142 therebetween. One or more of the lengths 1122, 1124, 1126, 1128 may be different than shown in FIG. 11 due to the addition of grooveless sections such as a fifth section 1304 and a sixth section 1306 respectively of a fifth length 1308 and a sixth length 1310, which are delineated via the dashed vertical lines 1142. Thus, the sections of a groove pattern may be defined by features of the grooves (e.g., apexes of the herringbone pattern) and/or an absence of grooves.

The groove depth of the fifth and sixth sections 1304, 1306 may be zero such that the surfaces of the fifth and sixth sections 1304, 1306 are grooveless (e.g., smooth). As an example, the shaft 1102 may be modified to produce the shaft 1302 by filling in the grooves to produce a smooth surface. Alternatively, the shaft 1102 may be machined in certain areas to level out the grooves by removing the material interposed between the grooves, thereby eliminating the grooves in those areas. Filling the grooves may result in a relatively larger circumferentially averaged diameter of the grooveless sections 1304, 1306 compared to removing the material interposed between the grooves. Thus, the diameter of the grooveless sections may be considered when selecting a means to remove the grooves. As another example, a new shaft (e.g., constructed from a blank rather than modifying the shaft 1102) having the same features as the shaft 1102 except for at the sections 1304 and 1306 may be produced.

Removing the grooves from one or more sections may counteract an expected thermal and structural deformation pattern, additionally or alternatively to other modifications described herein. For example, the groove pattern may be arranged as shown in FIG. 13 (e.g., with grooves being discontinuous due to the grooveless sections), and the grooves may be modified to vary axially by section or continuously. That is, the groove depth may follow a continuous profile such as shown in FIGS. 7-10 except for within the axial regions comprising the grooveless sections, or each section may have a section specific groove depth (e.g., groove depth that is approximately the same throughout a given section) different from one or more of the other sections.

Turning to FIG. 14, another shaft modification that may produce a hydrodynamic bearing in accordance with the present disclosure is axially varying an outer diameter thereof. As an example, a shaft 1402 is shown in FIG. 14, where the outer diameter 512 is modified to vary axially along a portion of the shaft 1402. A difference between the outer diameter 512 and the minimum diameter 1408 of the axially varied outer diameter 1410 may be proportional to a profile of an expected thermal and structural deformation pattern. Further, an axial length 1406 of the shaft 1402 affected by the modification to the outer diameter 512, which may be up to the entire axial length of the shaft 1402, may be selected according to the expected thermal and structural deformation pattern. Further still, a contour of the axially varied outer diameter 1410 may reflect the expected thermal and structural deformation pattern. For example, the smaller the axially varied outer diameter 1410 at a given axial position, the less significant the effect on modified pressure due to the thermal and structural deformation of the shaft and/or sleeve is expected at that axial position. Dashed borders 1404 indicate the axially constant outer diameter 512 of the unmodified shaft (e.g., shaft 502 of FIGS. 5 and 6) used to predict the expected thermal and structural deformation pattern.

It will be understood that while shown herein separately for clarity, the modifications to the shaft described above may also be present in combination. For example, a shaft of a hydrodynamic bearing in accordance with the present disclosure may include one or more modifications described herein, including axially varied groove depth as shown in FIGS. 7-10 and 12, varied axial section lengths as shown in FIG. 11, sections without grooves as shown in FIG. 13, and axially varied diameter as shown in FIG. 14. In such examples where two or more modifications are combined, intensities of the modifications may be reduced to work cooperatively rather than overcorrecting the thermal degradation pattern. For example, a shaft with both axially varied groove depths and varied section lengths may include a groove depth profile mimicking the thermal and structural deformation profile, but not as a mirror image as illustrated in the examples herein. As a more specific example, referencing FIGS. 7 and 8, the first trace 802 showing the groove depth 704 profile may have a slope closer to zero than the second trace 804 showing the thermal and structural deformation pattern 550 in an example where the axially varying groove depth is combined with another shaft modification (e.g., when the section lengths are not uniform and/or the diameter of the shaft is axially varied). Such a combination may be useful to address a thermal and structural deformation profile which would demand grooves deeper than possible, for example due to the relative magnitude of the shaft diameter. Additionally or alternatively, combining modifications to the shaft may be advantageous when addressing more complex thermal and structural deformation profiles than groove depth alone does not fully mitigate. Similar reasoning may be applied to other combinations of shaft modifications. For example, if the minimum diameter would be too small (e.g., due to material constraints) when axially varying the outer diameter alone according to intensity of thermal and structural deformation, another modification may be combined with the axially varying outer diameter to effectively increase the minimum diameter.

Further, modifications may be made to the sleeve of the hydrodynamic bearing to counteract thermal and structural deformation, additionally or alternatively to the one or more modifications to the shaft described above with regard to FIGS. 7-14.

For an example of modification to the sleeve, now referencing FIG. 15, a hydrodynamic bearing 1500 in accordance with the present disclosure is shown including the shaft 502 and a sleeve 1504. A dashed boundary 1510 indicates the shape of the unmodified sleeve (e.g., sleeve 504 of FIGS. 5 and 6) having the axially constant inner diameter 514.

The sleeve 1504 is modified compared to the sleeve 504 such that an inner diameter 1506 of the sleeve 1504 varies axially when not under operating conditions. Consequently, a radial dimension 1508 of the gap 508 varies axially when not under operating conditions. In this way, an inner surface 1512 of the sleeve 1502 is not cylindrical. The inner diameter 1506 may be larger in axial areas where less significant thermal and structural deformation is expected. Therefore, the greater the magnitude of expected thermal and structural deformation at an axial position, the lesser the difference between the unmodified inner diameter (e.g., diameter 514) and the axially varying inner diameter 1506. The profile of the inner diameter 1506 is shown as being linear, and may therefore correspond to a thermal and structural deformation pattern having a linear profile, such as the thermal and structural deformation pattern 550 of FIG. 5; however, non-linear diameter profiles including curved profiles are also possible, according to the expected thermal and structural deformation pattern and/or whether the inner diameter 1506 is adjusted in conjunction with a modification to the shaft such as described above. For example, if the both the groove depth of the grooves 506 and the inner diameter 1506 varies axially, the magnitude of each modification may be reduced. To elaborate, in such an example, the profiles of the groove depth and the inner diameter may have reduced slope compared to a linear expected thermal and structural deformation pattern. Other combinations of modifications to the shaft and/or sleeve may be applied similarly to achieve the effect of offsetting the effects on lubricant flow while thermally deformed under operating conditions.

Turning to FIG. 16, a flowchart of a method 1600 is shown for manufacturing a hydrodynamic bearing in accordance with the present disclosure. It will be understood that the method 1600 may be executed to manufacture the stationary and rotational components (e.g., shaft and sleeve) in any of the bearing systems, described with regard to FIGS. 1-15. Furthermore, the method 1600 may be carried out via one or more manufacturing devices including a controller and memory. Thus, the manufacturing device(s) may implement the method 1600 responsive to programmatic and/or user commands, for instance.

The method 1600 begins at 1602, wherein an expected thermal and structural deformation pattern (e.g., thermal and structural deformation pattern 550 or 650 of FIGS. 5 and 6, respectively) is determined, where the expected thermal and structural deformation pattern is a change in geometry expected to occur during operation of a bearing (e.g., bearing 500 of FIGS. 5 and 6) including a sleeve, a shaft, and grooves arranged in a groove pattern (on the sleeve and/or shaft), wherein a sleeve inner diameter (e.g., constant inner diameter 514 of FIGS. 5 and 6), a shaft outer diameter (e.g., constant outer diameter 512 of FIGS. 5 and 6), a groove cross sectional shape, a land to groove ratio, a groove angle, and a groove depth are axially constant. In at least some examples, the shaft is the stationary component and the sleeve is the rotational component, though it may be the opposite in other examples. The grooves may be formed in the sleeve or the shaft. The expected thermal and structural deformation pattern may be calculated using predictive modeling and/or via empirical testing using an X-ray source with the hydrodynamic bearing having a constant sleeve inner diameter, a constant shaft outer diameter, a constant groove cross sectional shape, a constant land to groove ratio, a constant groove angle, and a constant shaft groove depth (e.g., bearing 500 of FIGS. 5 and 6) is determined. The thermal and structural deformation pattern (e.g., thermal and structural deformation pattern 550 or 650 of FIGS. 5 or 6, respectively) may be influenced by material properties as well as a thermal profile generated during operation. As such, the thermal and structural deformation pattern may depend on one or more of groove geometry (e.g., herringbone pattern, depth, cross sectional shape, etc.), relative dimensions, materials, etc. In addition to physical aspects of the bearing design, the thermal and structural deformation pattern may be further dependent on rotational motion of the rotating component (e.g., sleeve) during operation. Thus, for a given bearing, there may be more than one potential thermal and structural deformation pattern, each corresponding to intended operational conditions such as rotational speed, torque load, etc. Therefore, the predictive modeling and/or the empirical testing techniques may be tuned to account for effects of rotational metrics (e.g., angular speed, torque, etc.) and configuration within a system (e.g., X-ray source of an imaging system), such as the orientation within the system, the other components of the system, etc.

The method 1600 proceeds to 1604, wherein the bearing is modified according to the thermal and structural deformation pattern. The modifications may be manufactured using laser machining, in one example. In such an example, the dwell time and number of passes of the laser may be used to control the modifications such as contour (e.g., location, depth, etc.) of the shaft outer surface, the sleeve inner surface, and/or the grooves. However, in other examples, electrochemical machining, grinding (e.g., lobe grinding), and/or sanding may be used to manufacture the modifications. Other means of machining the modifications described herein are also possible without departing from the scope of the present disclosure. Further, in some examples, modifying the bearing may include constructing a new shaft and/or sleeve (e.g., from raw materials) having the desired modifications (e.g., differences from the unmodified bearing used to determine the expected thermal and structural deformation pattern at 1602), rather than directly adjusting (e.g., machining) the parts of the bearing used at 1602. Thus, as used herein, modifying may include laser machining, electromechanical machining, grinding, sanding, and/or reconstructing. The modifications may be axially asymmetric (e.g., asymmetric with respect to an axial midpoint of the bearing), in at least some examples as described above, in order to counteract axial lubricant pumping effects of the expected thermal and structural deformation pattern.

In at least some examples, 1604 includes 1606, wherein one or more of the sleeve the inner diameter, the shaft outer diameter, the groove cross sectional shape, and the groove depth is modified to vary axially according to the determined thermal and structural deformation pattern. Modifying may include machining the shaft and/or sleeve, and/or forming a new shaft and/or sleeve with the desired changes from the shaft and sleeve used in determining the thermal and structural deformation pattern at 1602. For example, some of the grooves may be made deeper than others. Additionally or alternatively, some of the grooves may be rounded, sharpened, tapered, or otherwise reshaped. Additionally or alternatively, part of the shaft may be machined to have a smaller outer diameter. Additionally or alternatively, part of the sleeve may be machined to have a larger inner diameter.

In some examples, 1604 further includes 1608, wherein the groove pattern is modified according to the determined thermal and structural deformation pattern. It may be that the groove pattern is modified to have different section lengths. Additionally or alternatively, the groove pattern may be modified to include sections lacking grooves (e.g., grooveless sections). Additionally or alternatively, the land to groove ratio and/or the groove angle may be modified to vary by section or continuously. Modifying the groove pattern may modify the flow pattern of the lubricant due to the grooves being configured to generate pressure in a fluid interface during rotation of the rotational component (e.g., shaft).

The method 1600 ends after 1604. By completing the method 1600, a hydrodynamic bearing in accordance with the present disclosure is formed. The hydrodynamic bearing can then be incorporated in the system (e.g., CT imaging system) under conditions corresponding to the thermal and structural deformation pattern determined at 1602 with reduced lubricant loss. The modified hydrodynamic bearing may be less likely to experience lubricant starvation than the bearing having an axially constant sleeve inner diameter, an axially constant shaft outer diameter, and an axially constant shaft groove depth, due to the modifications counteracting the effects of thermal and structural deformation on local pressures which drive lubricant fluid flow.

The technical effect of the hydrodynamic bearings disclosed herein is to reduce lubricant loss (e.g., lubricant starvation) caused by thermal and structural deformation by modifying geometry of the hydrodynamic bearing according to the expected thermal and structural deformation pattern. In this way, effects of thermal and structural deformation on lubricant flow patterns may be at least partially mitigated, reducing the likelihood of lubricant being pumped out of the bearing. Thus, properties of the hydrodynamic bearing such as damping capability and stiffness may be maintained during operation of a system (e.g. imaging system) comprising the hydrodynamic bearing of the present disclosure. Further, a number and/or complexity of one or more seals in the system comprising the bearing may be reduced due to there being less fluid pumped toward the seal.

The disclosure also provides support for a hydrodynamic bearing, including: a rotational component, and a stationary component including a surface having a plurality of grooves arranged in a groove pattern and configured to generate pressure in a fluid interface during rotation of the rotational component, wherein one or more of a groove depth, a diameter of the rotational component, a land to groove ratio, a groove cross sectional shape, a groove angle, or a diameter of the stationary component vary axially according to an expected thermal and structural deformation pattern. In a first example of the system, the rotational component is a sleeve circumferentially surrounding the stationary component which is a shaft. In a second example of the system, optionally including the first example, a profile of the groove depth is a mirror image of the expected thermal and structural deformation pattern. In a third example of the system, optionally including one or both of the first and second examples, the groove pattern includes sections lacking grooves. In a fourth example of the system, optionally including one or more or each of the first through third examples, the groove pattern is a herringbone pattern comprising sections arranged axially, and the grooves are parallel and linear within each of the sections. In a fifth example of the system, optionally including one or more or each of the first through fourth examples, the sections have different axial lengths. In a sixth example of the system, optionally including one or more or each of the first through fifth examples, the fluid interface includes a liquid state metal disposed in a gap between the rotational component and the stationary component. In a seventh example of the system, optionally including one or more or each of the first through sixth examples, the groove depth, the diameter of the rotational component, the land to groove ratio, the groove cross sectional shape, the groove angle, and/or the diameter of the stationary component vary axially symmetrically or asymmetrically. In an eighth example of the system, optionally including one or more or each of the first through seventh examples, the hydrodynamic bearing is included in an X-ray source of an imaging system. In a ninth example of the system, optionally including one or more or each of the first through eighth examples, the hydrodynamic bearing includes one or more journal and/or thrust bearings.

The disclosure also provides support for an X-ray source with a hydrodynamic bearing, the X-ray source comprising: a sleeve, and a shaft including an outer surface having a plurality of grooves configured to generate pressure in a liquid metal interface during rotation of the sleeve around the shaft, where one or more of a sleeve inner diameter, a shaft outer diameter, a groove angle, a groove cross sectional shape, a land to groove ratio, and a groove depth varies axially according to an expected thermal and structural deformation pattern. In a first example of the system, effects of the thermal and structural deformation pattern and the axial variation on a fluid flow pattern in the liquid metal interface counteract such that fluid is prevented from pumping out of the hydrodynamic bearing. In a second example of the system, optionally including the first example, the sleeve inner diameter, the shaft outer diameter, the groove angle, the groove cross sectional shape, the land to groove ratio, and/or the groove depth varies axially asymmetrically. In a third example of the system, optionally including one or both of the first and second examples, the expected thermal and structural deformation pattern depends on material properties of the sleeve and the shaft, and operating conditions. In a fourth example of the system, optionally including one or more or each of the first through third examples, the plurality of grooves is arranged in a groove pattern that varies axially such that sections of the groove pattern are different lengths and/or some of the sections lack grooves. In a fifth example of the system, optionally including one or more or each of the first through fourth examples, the plurality of grooves is arranged in a groove pattern having sections, and where the sleeve inner diameter, the shaft outer diameter, the groove angle, the groove cross sectional shape, the land to groove ratio, and/or the groove depth varies axially by section or continuously. In a sixth example of the system, optionally including one or more or each of the first through fifth examples, a profile of the groove depth is proportional to the expected thermal and structural deformation pattern and deeper grooves are positioned where a magnitude of the expected thermal and structural deformation pattern is greater. In a seventh example of the system, optionally including one or more or each of the first through sixth examples, the grooves are made shallower in deformed areas where thermal and structural deformation is expected, reducing pumping strength of the deformed areas such that undeformed areas balance the effect on lubricant pumping caused by the deformed areas. In an eighth example of the system, optionally including one or more or each of the first through seventh examples, the hydrodynamic bearing includes a journal bearing and/or a thrust bearing. In a ninth example of the system, optionally including one or more or each of the first through eighth examples, the plurality of grooves are herringbone grooves.

FIGS. 1-7, 9, 11, 13-15, and 17 show example configurations with approximate position. FIGS. 3-4 are shown approximately to scale; though other relative dimensions may be used. As used herein, the terms "approximately" is construed to mean plus or minus five percent of the range unless otherwise specified.

If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. Moreover, the components may be described as they relate to reference axes included in the drawings.

Features described as axial may be approximately parallel with an axis referenced unless otherwise specified. Features described as counter-axial may be approximately perpendicular to the axis referenced unless otherwise specified. Features described as radial may circumferentially surround or extend outward from an axis, such as the axis referenced, or a component or feature described prior as being radial to a referenced axis, unless otherwise specified.

Features described as longitudinal may be approximately parallel with an axis that is longitudinal. A lateral axis may be normal to a longitudinal axis and a vertical axis. Features described as lateral may be approximately parallel with the lateral axis. A vertical axis may be normal to a lateral axis and a longitudinal axis. Features described as vertical may be approximately parallel with a vertical axis.

It will be appreciated that the configurations and routines disclosed herein are exemplary in nature, and that these specific embodiments are not to be considered in a limiting sense, because numerous variations are possible. Moreover, unless explicitly stated to the contrary, the terms "first," "second," "third," and the like are not intended to denote any order, position, quantity, or importance, but rather are used merely as labels to distinguish one element from another. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A hydrodynamic bearing (900, 700, 500, 1500), including:
a rotational component; and
a stationary component including a surface having a plurality of grooves (506, 416) arranged in a groove (506) pattern and configured to generate pressure in a fluid interface (320, 408) during rotation (106) of the rotational component, wherein one or more of a groove (506) depth (704), a diameter (514) of the rotational component, a land to groove (506) ratio, a groove cross sectional shape, a groove angle (1140), or a diameter of the stationary component vary axially according to an expected thermal and structural deformation pattern (650, 550).

2. The hydrodynamic bearing (900, 700, 500, 1500) of claim 1, wherein the rotational component is a sleeve (504, 404, 1502, 306, 1504) circumferentially surrounding the stationary component which is a shaft (1402, 702, 402, 308, 1302, 1102, 502, 902).

3. The hydrodynamic bearing (900, 700, 500, 1500) of claim 1, wherein a profile of the groove (506) depth (704, 704) is a mirror image of the expected thermal and structural deformation pattern (650, 550, 650, 550).

4. The hydrodynamic bearing (900, 700, 500, 1500) of claim 1, wherein the groove pattern includes sections (1304) lacking grooves.

5. The hydrodynamic bearing (900, 700, 500, 1500) of claim 1, wherein the groove pattern is a herringbone pattern comprising sections (1112) arranged axially, and the grooves (506, 416) are parallel and linear within each of the sections (1112).

6. The hydrodynamic bearing (900, 700, 500, 1500) of claim 5, wherein the sections (1304, 1112) have different axial lengths (1122).

7. The hydrodynamic bearing (900, 700, 500, 1500) of claim 1, wherein the fluid interface (320, 408) includes a liquid state metal disposed in a gap (508) between the rotational component and the stationary component.

8. The hydrodynamic bearing (900, 700, 500, 1500) of claim 1, wherein the hydrodynamic bearing (900, 700, 500, 1500) includes one or more journal and/or thrust bearings.

9. An X-ray source (300, 104) with a hydrodynamic bearing (900, 700, 500, 1500), the X-ray source (300, 104) comprising:
a sleeve (504, 404, 1502, 306, 1504); and
a shaft (1402, 702, 402, 308, 1302, 1102, 502, 902) including an outer surface (518) having a plurality of grooves (506, 416) configured to generate pressure in a liquid metal interface (320, 320) during rotation of the sleeve (504, 404, 1502, 306, 1504) around the shaft (1402, 702, 402, 308, 1302, 1102, 502, 902), where one or more of a sleeve inner diameter (514), a shaft outer diameter (512), a groove angle (1140), a groove cross sectional shape, a land to groove ratio, and a groove depth (704) varies axially according to an expected thermal and structural deformation pattern (650, 550).

10. The X-ray source (300, 104) of claim 9, wherein effects of the thermal and structural deformation pattern (650, 550) and the axial variation on a fluid flow pattern in the liquid metal interface (320, 320) counteract such that fluid is prevented from pumping out of the hydrodynamic bearing (900, 700, 500, 1500).

11. The X-ray source (300, 104) of claim 9, wherein the sleeve inner diameter (514), the shaft outer diameter (512), the groove angle (1140), the groove cross sectional shape, the land to groove ratio, and/or the groove depth (704) varies axially asymmetrically.

12. The X-ray source (300, 104) of claim 9, wherein the plurality of grooves (506, 416) is arranged in a groove (506) pattern that varies axially such that sections (1112) of the groove pattern are different lengths (1122) and/or some of the sections (1304) lack grooves (506, 416).

13. The X-ray source (300, 104) of claim 9, wherein a profile of the groove (506) depth (704, 704) is proportional to the expected thermal and structural deformation pattern (650, 550, 650, 550) and deeper grooves (506, 416) are positioned where a magnitude of the expected thermal and structural deformation pattern (650, 550, 650, 550) is greater.

14. The X-ray source (300, 104) of claim 9, wherein the grooves (506, 416) are made shallower in deformed areas where thermal and structural deformation is expected, reducing pumping strength of the deformed areas such that undeformed areas balance the effect on lubricant pumping caused by the deformed areas.

15. The X-ray source (300, 104) of claim 9, where the hydrodynamic bearing (900, 700, 500, 1500, 500) includes a journal bearing (900, 700, 500) and/or a thrust bearing (900, 700, 500).
